(19) Europäisches Patentamt
European Patent Office
Office européen des brevets

(11) Veröffentlichungsnummer: **0 209 722**
**B1**

(12) # EUROPÄISCHE PATENTSCHRIFT

(45) Veröffentlichungstag der Patentschrift: **31.08.88**

(51) Int. Cl.⁴: **C 08 G 63/62**

(21) Anmeldenummer: **86108236.0**

(22) Anmeldetag: **16.06.86**

(54) **Verfahren zur Herstellung von duromeren aliphatischen Polycarbonaten.**

(30) Priorität: **29.06.85 DE 3523399**

(43) Veröffentlichungstag der Anmeldung: **28.01.87 Patentblatt 87/5**

(45) Bekanntmachung des Hinweises auf die Patenterteilung: **31.08.88 Patentblatt 88/35**

(84) Benannte Vertragsstaaten: **DE FR GB IT NL**

(56) Entgegenhaltungen:
**BE-A-675 190**
**DE-A-3 103 135**

(73) Patentinhaber: **BAYER AG, Konzernverwaltung RP Patentabteilung, D-5090 Leverkusen 1 Bayerwerk (DE)**

(72) Erfinder: **Mues, Peter, Dr., Weihers Hecke 30, D-4100 Duisburg 46 (DE)**
Erfinder: **Kerimis, Dimitrios, Dr., Pulheimer Strasse 15, D-5000 Köln 71 (DE)**
Erfinder: **Müller, Hanns Peter, Dr., Im Kerberich 6, D-5068 Odenthal (DE)**
Erfinder: **Buysch, Hans- Josef, Dr., Brandenburger Strasse 28, D-4150 Krefeld (DE)**

**EP 0 209 722 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft ein neues Verfahren zur Herstellung von duromeren aliphatischen Polycarbonaten aus cyclischen aliphatischen Kohlensäureestern durch ringöffnende Polymerisation.

Es ist bekannt, daß cyclische Carbonate durch alkalisch reagierende Verbindungen, z. B. Kaliumcarbonat bei erhöhter Temperatur (130° C) polymerisiert werden könen (J. Am. Chem. Soc. 52, 314 (1930)).

In den DE-OS-1 545 116, 1 545 117 und 1 545 118 werden Alkalimetallverbindungen, Metallalkoholate und -amide als besonders geeignete Katalysatoren für diese Reaktion genannt, die schon bei niedrigen Temperaturen (ca. 90° C) verwendet werden können.

Für die Herstellung duromerer aliphatischer Polycarbonate durch ringöffnende Copolymerisation mono- und bifunktioneller, d. h. vernetzender Ringcarbonate sind diese Katalysatoren ungeeignet, da sie zur Bildung mehrphasiger Systeme führen, die entweder keine oder nur eine unkontrollierte Polymerisation auslösen. Nicht reproduzierbare Polymerisationen und ungleichmäßig durchpolymerisierte Produkte sind das Resultat. In anderen Fällen werden in Folge starker $CO_2$-Abspaltung während der Polymerisation nur blasenhaltige Produkte gebildet.

Die DE-OS-3 103 135 und 3 204 078 beschreiben die Verwendung alkalisch reagierender Thallium-Verbindungen zur Polymerisation cyclischer Carbonate. Diese Katalysatoren können zur Herstellung duromerer Produkte nur sehr begrenzt verwendet werden, da die Polymerisation auch hier nicht in allen Fällen reproduzierbar verläuft. Besonders nachteilig ist jedoch, daß in Gegenwart üblicher Füllstoffe und Verstärkermaterialien für Duromere, z. B. Quarzsand und Glasfaser mit dieser Tl-Verbindung keine Polymerisation abläuft.

Es war daher wünschenswert, ein Verfahren zu entwickeln, das eine reproduzierbare Herstellung, auch verstärkter Duromerer, durch ringöffnende Polymerisation cyclischer Kohlensäureester gestattet.

Es wurde nun ein Verfahren gefunden, das die Herstellung von duromeren, gegebenenfalls verstärkten aliphatischen Polycarbonaten durch ringöffnende Copolymerisation von monocyclischen Ringcarbonaten und bifunktionellen vernetzend wirkenden Ringcarbonaten problemlos gestattet, das dadurch gekennzeichnet ist, daß man als Katalysatoren quartäre Salze der Formel I

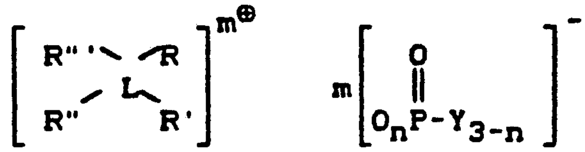 (I),

wobei

L für H oder P

R für H, eine $C_1$-$C_6$-Alkyl-, $C_2$-$C_6$-Hydroxyalkyl-, $C_6$-$C_{10}$-Cycloalkyl- oder $C_6$-$C_{10}$-Aryl-Gruppe steht,

R', R'', R''' für R stehen oder mindestens 2 dieser Reste gemeinsam einen 5-10 C-Atome aufweisenden Heterocyclus bilden, in dem bis zu drei C-Atome durch Heteroatome wie N, O, S, P substituiert sein können und in welchem L Teil des Rings ist,

Y für gleiche oder verschiedene $C_1$-$C_6$-Alkoxy-, $C_1$-$C_6$-Thioalkyl-, $C_1$-$C_6$- Alkyl-, Aryl- oder Aryloxy-Gruppen, und

n für die Zahl 1 oder 2 steht,

m für die Zahl 1 oder 2 steht,

verwendet.

Dabei ist es überraschend, daß beispielsweise die Salze aus tertiären Aminen mit alkylierend wirkenden Estern von Säuren des Phosphors deutlich bessere Polymerisationskatalysatoren darstellen, als es die einzelnen Komponenten der Salze, für sich allein verwendet, sind.

Die im erfindungsgemäßen Verfahren verwendeten Katalysatoren sind im allgemeinen Umsetzungsprodukte von

i) Alkylphosphaten oder Akylphosphonaten der Formel (II)

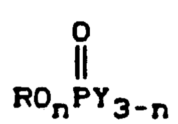 (II),

in welcher

R, Y und n die bei Formel I beschriebene Bedeutung besitzen, mit

ii) Phosphinen, Aminen, Amiden oder N-Heterocyclen der Formel (III)

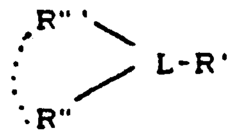 (III),

wobei
L für N, P steht und
R', R'' und R''' die bei Formel (I) angegebene Bedeutung haben.

Als Katalysatorkomponente (i) können teil- oder vollständig alkylierte Derivate der Phosphonsäure bzw. der Phosphorsäure verwendet werden, wobei vollständig alkylierte Derivate bevorzugt sind.

Beispiele von als Katalysatorkomponente (i) besonders geeigneten P-Verbindungen sind Methanphosphonsäuredimethylester, Phosphorsäuredimethylester und Phosphorsäuredibutylester.

Bei der Katalysatorkomponente (ii) handelt es sich um P- und N-haltige organische Verbindungen, z. B. primäre, sekundäre und tertiäre Amine und Phosphine, Amide und N-Heterocyclen. Typische Beispiele von als Katalysatorkomponente (ii) geeigneten N-Verbindungen sind Ammoniak, Diethylamin, Triethylamin, Dibutylamin, N,N-Dimethylcyclohexylamin, Dimethylbenzylamin, Harnstoff, Melamin, N-Methylimidazol, N-Methylpyrrol, Hydrazin, Triethylendiamin, Hexamethylentetramin, Morpholin, N-Methylmorpholin, 1-5-Diazabicyclo[3,4,0]-non-5-en, 1,8-Diazabicyclo-[5,4,0]-undec-7-en, Diazabicyclooctan, Hexamethylen-1,6-diamin, Mono-, Di- und Triethanolamin, Ethylendiamin, Pyridin und 1-4-Diaminocyclohexan sowie Tri-n-butylphosphin als beispielsweise geeignete P-Verbindung.

Prinzipiell können lineare und cyclische Verbindungen mit einer oder mehreren Amino-, Imino-, Epimino- oder Nitrilo-Gruppen als Katalysatorkomponente (ii) verwendet werden.

Die Herstellung der erfindungsgemäß verwendbaren Katalysatoren erfolgt nach bekannten Verfahren (z. B. Houben-Weyl, Bd. XII/2, S. 262 ff) durch Umsetzung der beispielhaft genannten Komponente (i) und (ii) mit oder ohne Lösungsmittel bei Temperaturen von 100 bis 200°C. Dabei kann vorteilhaft sein, unter Intergas und/oder Druck zu arbeiten.

Besonders bevorzugte Beispiele erfindungsgemäß verwendbarer Katalysatoren sind:

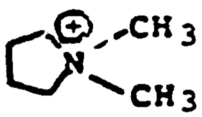 . $X^{\ominus}$

$H_3C-\overset{\oplus}{N}(CH_2CH_2OH)_3$ . $X^{\ominus}$

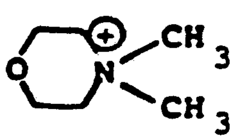 . $X^{\ominus}$

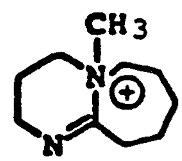 . $X^{\ominus}$

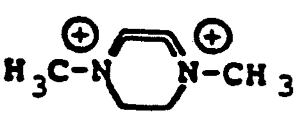 . 2 $X^{\ominus}$

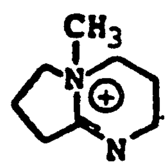 . $X^{\ominus}$

$(H_3C_2)_3\overset{\oplus}{N}CH_3$ . $X^{\ominus}$

$Bu_3\overset{\oplus}{P}-CH_3$ . $X^{\ominus}$

$Bu_2\overset{\oplus}{N}H-CH_3 \cdot X^{\ominus}$

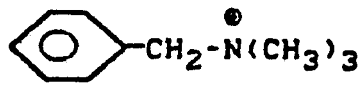 · $X^{\ominus}$

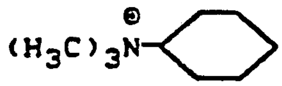 · $X^{\ominus}$

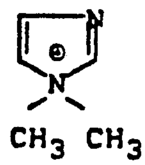 · $X^{\ominus}$

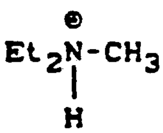 · $Z^{\ominus}$

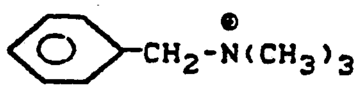 · $Z^{\ominus}$

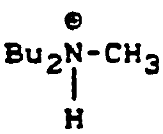 · $Z^{\ominus}$

$X^{\ominus}$ = 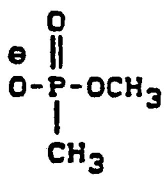 $Y^{\ominus}$ = 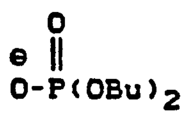 $Z^{\ominus}$ = 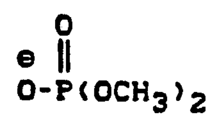

Die Herstellung der verwendeten Ammonium- und Phosphonium-Verbindungen sowie ihre Verwendung zur Trimerisierung von Isocyanaten und als PU-Aktivatoren ist in den DE-OS-3 227 489 und 3 328 661 beschrieben.

Die Brauchbarkeit eines Trimerisierungskatalysators für Isocyanate als Polymerisationskatalysator für cyclische Carbonate war nicht zu erwarten, da die beispielsweise auch als Trimerisierungskatalysatoren verwendeten Verbindungen Epoxid/Amin, Oxalsäure, Ethylencarbonat und Friedel-Crafts-Katalysatoren (J.H. Saunders, K.G. Frisch, "Polyurethanes Chemistry and Technology". S. 94 ff (1962): Adv. in Catalysis 13 (1962) 393) zur Polymerisation cyclischer Carbonate unbrauchbar sind.

Im erfindungsgemäßen Verfahren werden die verwendeten Katalysatoren vorzugsweise in Substanz eingesetzt. Sie werden in Mengen von 0,001 - 5 Gew.-% (bezogen auf das Gewicht der Gesamtmonomerenmischung), bevorzugt 0,005-3 Gew.-%, besonders bevorzugt 0,01 - 1 Gew.-%, angewendet.

Die Temperaturen, bei denen im erfindungsgemäßen Verfahren die Katalysatorsysteme zur ringöffnenden Copolymerisation monocyclischer Ringcarbonate mit bifunktionellen cyclischen Kohlensäureestern eingesetzt werden, betragen 50 bis 200° C, bevorzugt 100 bis 170° C, besonders bevorzugt 120 bis 160° C.

Als monocyclische Carbonate können in der ringöffnenden Copolymerisation beispielsweise eingesetzt werden:

Carbonate der allgemeinen Formel (IV)

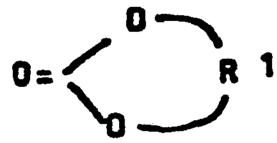

(IV),

worin
$R^1$ $(CH_2)_n$ mit n = 3-6, $-CH_2-CH=CHCH_2-$, $-CH_2CH_2CH(CH_3)-$, $-CH_2CH_2OCH_2CH_2OCH_2CH_2-$,

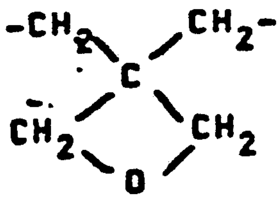

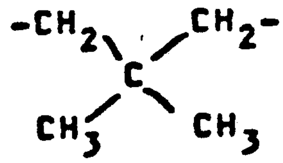

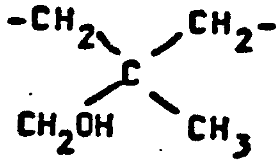

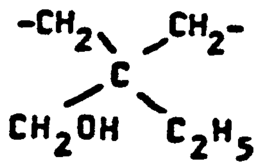

bedeutet,
Carbonate der allgemeinen Formel (V)

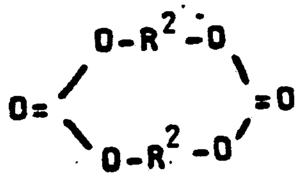

(V),

$R^2$ $(CH_2)_n$ mit n = 4-12, $-CH_2CH_2OCH_2CH_2-$, $-CH_2CH_2-O-CH_2CH_2-O-CH_2CH_2-$, $-CH_2CH_2NCH_2CH_2-$
|
$CH_3$

bedeutet,
und ein Carbonat der allgemeinen Formel (VI)

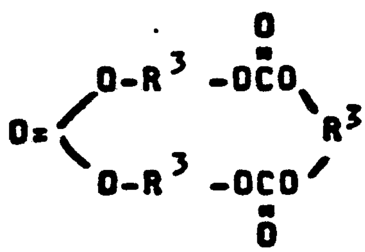

(VI),

worin
$R^3$ $-CH_2CH_2OCH_2CH_2-$ bedeutet.
Bevorzugt werden die Carbonate der allgemeinen Formel (IV) verwendet.

Als bifunktionelle, vernetzend wirkende Ringcarbonate können in der ringöffnenden Polymerisation beispielsweise eingesetzt werden:

Carbonate der allgemeinen Formel (VII)

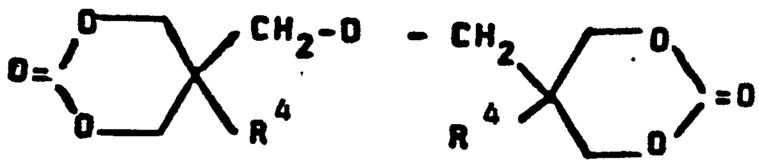 (VII),

worin
$R^4$ für einen Alkylrest mit 1 bis 4 C-Atomen steht,
Carbonate der allgemeinen Formel (VIII)

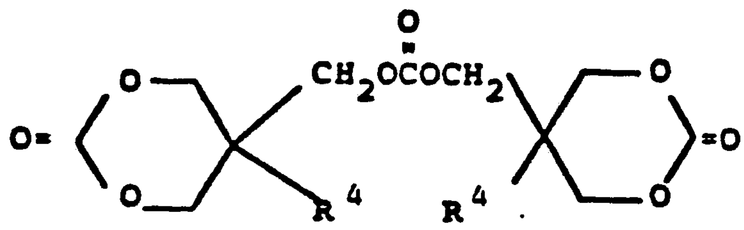 (VIII),

worin
$R^4$ die bei Formel (VII) angegebene Bedeutung hat,
Carbonate der allgemeinen Formel (IX)

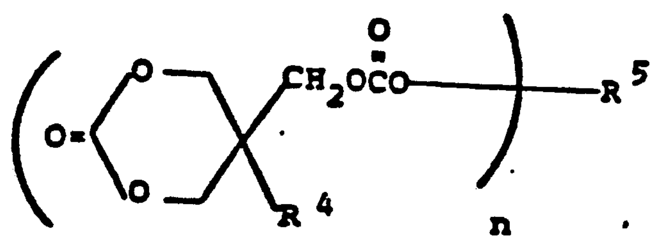 (IX)

worin
$R^4$ die bei Formel (VII) angegebene Bedeutung hat,
$R^5$ für einen Alkylidenrest mit 3 bis 18 C-Atomen, für einen Arylrest mit 6 bis 12 C-Atomen oder für einen Aralkylrest mit 7 bis 24 C-Atomen steht und
n für die Zahl 2, 3 oder 4 steht.

Bevorzugt werden Carbonate der allgemeinen Formel (VIII) verwendet.

Im erfindungsgemäßen Verfahren werden die bifunktionellen, vernetzend wirkenden Ringcarbonate in Mengen von 2-50 Gew.-%, bevorzugt 5-20 Gew.-% dem monocyclischen Ringcarbonat zugesetzt, bezogen auf die Gesamtmenge an eingesetzten Carbonaten.

Im erfindungsgemäßen Verfahren werden die cyclischen Carbonate in Substanz ohne Verwendung von Lösungsmitteln durch Zusatz der oben beschriebenen Katalysatoren in den oben angegebenen Mengen bei den oben angegebenen Temperaturen polymerisiert.

Das erfindungsgemäße Verfahren wird bei Normaldruck oder Überdruck, bevorzugt bei Normaldruck durchgeführt.

Der Einsatz der nach dem erfindungsgemäßen Verfahren erhaltenen Duromeren empfiehlt sich überall dort, wo hohe Anforderungen an duromerentypische Eigenschaften die Wärmeformbeständigkeit und Unempfindlichkeit gegen lösende und quellende Agentien (z. B. Kraft- und Schmierstoffe) gestellt werden und wo darüber hinaus gute mechanische Eigenschaften, insbesondere hohe Zähigkeit notwendig sind. Als Beispiel seien Automobilteile, insbesondere solche aus dem steinschlaggefärdeten Bereich genannt, wie Spoiler, Stoßstangenteile und Kotflügelauskleidungen u.s.w.

**Beispiele**

**Beispiel 1-16**

Zu einer Mischung aus 90 Teilen 5,5-Dimethyl-1,3-dioxan-2-on (Neopentylglykolcarbonat) und 10 Teilen 5,5'-(Carbonylbis-(oxy-methylen)-bis-(5-ethyl-1,3-dioxan-2-on) (VIII) mit $R^4 = C_2H_5$) wird der Katalysator in der unten angegebenen Menge bei einer Temperatur der Monomerenschmelze von 120°C hinzugegeben. Anschließend wird auf die unten angegebene Temperatur erhitzt. Nach jeweils kurzer Zeit (5 bis 10 Minuten) erstarren die anfänglich flüssigen Schmelzen zu klaren, nicht mehr verformbaren Polymerisaten von großer Zähigkeit, Elastizität und Festigkeit (siehe Tabelle S. 15).

**Beispiel 17**

Eine Mischung auf 72 Teilen Neopentylglykolcarbonat, 8 Teilen 5,5'-(Carbonylbis-(oxymethylen)-bis-(5-ethyl-1,3-dioxan-2-on) (VIII mit $R^4 = C_2H_5$) und 0,2 Teilen Katalysator aus Beispiel 1 wird bei einer Temperatur von 130°C zu 20 Teilen Glasfaser gegeben (eine Polymerisationstemperatur von 150°C ist ebenfalls möglich). Nach kurzer Zeit wird ein klares glasfaserverstärktes Polymerisat erhalten.

**Beispiel 18**

(Vergleich gegenüber DE-OS-3 103 135 und 3 204 078, in denen Thallium-Verbindungen zur Polymerisation cyclischer Carbonate verwendet werden)

Eine Mischung aus 72 Teilen Neopentylglykolcarbonat, 8 Teilen 5,5-(Carbonylbis-(oxymethylen)-bis-(5-ethyl-2,3-dioxan-2-on) (VIII mit $R^4 = C_2H_5$) und 0,2 Teilen Thallium(1)-acetat wird bei 130°C zu 20 Teilen Glasfaser gegeben. Es tritt selbst nach Reaktionszeiten > 2 Stunden keine Härtung ein. Bei 150°C kann die Härtung wegen starker Gasentwicklung nicht mehr durchgeführt werden.

| Beispiel | Katalysator hergestellt aus | verwendete Menge (Teile) | Polymerisationstemperatur (°C) |
|---|---|---|---|
| 1 | Triethylamin/A | 0,1 | 150 |
| 2 | N-Me150 | 0,08 | 150 |
| 3 | Triethylamin/B | 1 | 150 |
| 4 | Dimethylbenzylamin/C | 0,1 | 150 |
| 5 | Dimethylbenzylamin/A | 1 | 120 |
| 6 | 4-Dimethylaminoaniln/B | 1 | 150 |
| 7 | Diazabicyclooctan/A | 1 | 150 |
| 8 | N-Methylmorpholin/A | 0,3 | 120 |
| 9 | N-Methylpyrrol/A | 0,3 | 120 |
| 10 | N,N-Dimethylcyclohexylamin/A | 0,1 | 140 |
| 11 | Dibutylamin/A | 1 | 150 |
| 12 | DBU*/A | 0,2 | 150 |
| 13 | DBN**/A | 1 | 150 |
| 14 | Diethylamin/D | 0,2 | 150 |
| 15 | Dibutylamin/D | 0,2 | 150 |
| 16 | Tri-n-butylphosphin/A | 1 | 150 |

*DBU = 1,8-Diazabicyclo[5,4,0]undec-7-en
**DBN = 1,5-Diazabicyclo[4,3,0]non-5-en
A = Methanphosphonsäure-dimethylester
B = Phosphorsäure-dibutylester
C = Phosphorsäure-trimethyl (Trimethylphosphat)
D = Phosphorsäure-dimethylester

**Patentanspruch**

Verfahren zur Herstellung von duromeren, gegebenenfalls verstärkten aliphatischen Polycarbonaten durch ringöffnende Copolymerisation von monocyclischen Ringcarbonaten und bifunktionellen, vernetzend wirkenden Ringcarbonaten, dadurch gekennzeichnet, daß man als Katalysatoren quartäre Salze der Formel I

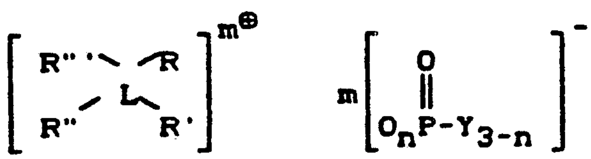

(I),

wobei
L für N oder P
R für H, eine $C_1$-$C_6$-Alkyl, $C_2$-$C_6$-Hydroxyalkyl-, $C_6$-$C_{10}$-Cycloalkyl- oder $C_6$-$C_{10}$-Aryl-Gruppe steht,

R', R'', R''' für R stehen oder mindestens 2 dieser Reste gemeinsam einen 5-10 C-Atome aufweisenden Heterocyclus bilden, in dem bis zu drei C-Atome durch Heteroatome wie N, O, S, P substituiert sein können und in welchem L Teil des Rings ist,

Y für gleiche oder verschiedene $C_1$-$C_6$-Alkoxy-, $C_1$-$C_6$-Thioalkyl, $C_1$-$C_6$- Alkyl, Aryl- oder Aryloxy-Gruppen,

und

n für die Zahl 1 oder 2,

und

m für die Zahl 1 oder 2 steht,

verwendet.

**Claim**

A process for the production of duromeric, optionally reinforced, aliphatic polycarbonates by ring-opening copolymerization of monocyclic ring carbonates and bifunctional, crosslinking ring carbonates, characterized in that quaternary salts corresponding to the following formula

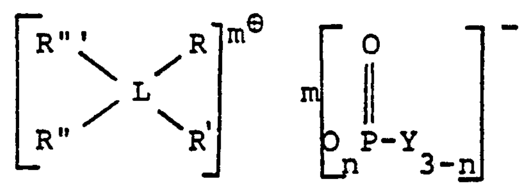

in which

L represents N or P,

R represents H, a $C_1$-$C_6$ alkyl, $C_2$-$C_5$ hydroxyalkyl, $C_6$-$C_{10}$ cycloalkyl or $C_6$-$C_{10}$ aryl group,

R', R'', R''' have the same meaning as R or at least two of these substituents together form a $C_5$-$C_{10}$ heterocycle in which up to three C atoms may be substituted by heteroatoms such as N, O, S, P, and in which L is part of the ring,

Y may be the same or different and represents $C_1$-$C_6$ alkoxy, $C_1$-$C_6$ thioalkyl, $C_1$-$C_6$ alkyl, aryl or aryloxy groups,

and

n is the number 1 or 2

and

m is the number 1 or 2.

**Revendication**

Procédé de production de polycarbonates aliphatiques duromères éventuellement renforcés par copolymérisation décyclisante de carbonates monocycliques et de carbonates cycliques bifonctionnels à action réticulante, caractérisé en ce qu'on utilise comme catalyseurs des sels quaternaires de formule I:

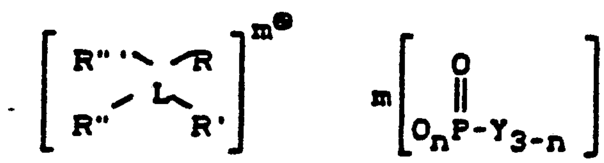

(I),

dans laquelle

L représente N ou P

R représente H, un groupe alkyle en $C_1$ à $C_6$, hydroxyalkyle en $C_2$ à $C_6$, cycloalkyle en $C_6$ à $C_{10}$ ou aryle en $C_6$ à $C_{10}$,

R', R', R''' représentent R ou bien au moins deux de ces restes forment conjointement un hétérocycle présentant 5 à 10 atomes de carbone, dans lequel jusqu'à 3 atomes de carbone peuvent être remplacés par des hétéroatomes tels que N, O, S, P et dans lequel L représente une partie du noyau,

Y représente des groupes alkoxy en $C_1$ à $C_6$, thioalkyle en $C_1$ à $C_6$, alkyle en $C_1$ à $C_6$, aryle ou aryloxy identiques ou différents,

et

n représente le nombre 1 ou 2,

et

m représente le nombre 1 ou 2.